# EUROPEAN PATENT SPECIFICATION

(11) **EP 3 085 195 B1**
(45) Date of publication and mention of the grant of the patent: **20.10.2021**
(21) Application number: 14872449.5
(22) Date of filing: 23.09.2014
(51) Int. Cl.: H04B 5/00

(54) **NEAR FIELD COMMUNICATION ASSISTED DEVICE AND SERVICE DISCOVERY**
NAHFELDKOMMUNIKATIONSGESTÜTZTE VORRICHTUNG UND DIENSTENTDECKUNG
DISPOSITIF ASSISTÉ PAR UNE COMMUNICATION EN CHAMP PROCHE ET DÉCOUVERTE DE SERVICE

(30) Priority: 16.12.2013 US 201361916385 P
(43) Date of publication of application: 26.10.2016
(73) Proprietor: Intel Corporation, Santa Clara, CA 95054 (US)
(72) Inventor: CORDEIRO, Carlos, Portland, Oregon 97229 (US); QI, Emily H., Gig Harbor, WA 98332 (US); MCCALL, David J., Dallas, Texas 75204 (US); VENKATESAN, Ganesh, Hillsboro, Oregon 97124 (US)
(74) Representative: HGF
(86) International application number: PCT/US2014/057011
(87) International publication number: WO 2015/094447

(56) References cited:
- WO-A2-2012/173423
- US-A1- 2010 290 400
- US-A1- 2011 080 869
- US-A1- 2011 258 313
- US-A1- 2011 258 313
- US-A1- 2012 100 803
- US-A1- 2012 163 235
- US-A1- 2012 265 913
- US-A1- 2014 091 987
- "Wi-Fi Peer-to-Peer (P2P) Technical Specification v1.2", WI-FI PEER-TO-PEER (P2P) SPECIFICATION, WI-FI ALLIANCE, US , vol. V1.2 14 December 2011 (2011-12-14), pages 1-159, XP008165048, Retrieved from the Internet: URL:https://www.wi-fi.org/knowledge-center /published-specifications

## Description

### TECHNICAL FIELD

Embodiments described herein generally relate to wireless communications and in particular to peer-to-peer device discovery and service discovery using near field communication.

### BACKGROUND

Many modern devices include networking capabilities. In particular, many devices include various communication and networking abilities. Modern applications are beginning to take advantage of this and provide for interconnectivity of such devices. For example, social networking applications, Internet of Things, wireless docking, etc., may provide for the interconnectivity of various devices. A variety of standards are used and/or proposed to facilitate such device connectivity. For example, Wi-Fi Direct, peer-to-peer, proximity discovery, or the like.

In order to provide mechanisms for such connection techniques, available services and connection attributes must be communicated. Typically, such services and attributes are discovered using Wi-Fi. As will be appreciated, using Wi-Fi to negotiate device and service discovery may be time consuming and may consume a significant amount of power.

US 2011/0258313 A1 describes techniques for performing network-assisted peer discovery to enable peer-to-peer (P2P) communication. In one design, a device registers with a network entity (e.g., a directory agent) so that the presence of the device and possibly other information about the device can be made known to the network entity. The network entity collects similar information from other devices. The device sends a request to the network entity, e.g., during or after registration. The request includes information used to match the device with other devices, e.g., information about service(s) provided by the device and/or service(s) requested by the device. The directory agent matches requests received from all devices, determines a match between the device and at least one other device, and sends a notification to perform peer discovery. The device performs peer discovery in response to receiving the notification from the network entity.

US 2012/265913 A1 describes a method, apparatus, and computer program product to enable simplified configuring of a wireless docking group for wireless devices by allowing a wireless device to communicate its capabilities and characteristics of one or more wireless devices within a wireless docking group, using a new Wireless Docking Protocol, to a wireless docking station that will use that information and the Wireless Docking Protocol to define an optimal set of connections for wireless devices in the wireless docking group.

US 2011/080869 A1 relates to a method for increasing a capacity in a peer-to-peer (P2P) wireless network and proposes a scheme in which well-connected nodes of the P2P wireless network can be exploited in a manner that increases the overall connectivity of all the nodes in the network.

WO 2012/173423 A2 relates to a wireless data communication method which includes receiving metadata for first content from a wireless data communication apparatus using a near field communication (NFC) scheme, displaying the received metadata, and connecting, if information contained in the metadata is selected, to the wireless data communication apparatus using a wireless fidelity peer-to-peer connection scheme and receiving the first content according to the content or selected information.

"Wi-Fi Peer-to-Peer (P2P) Technical Specification vl.2", Wi-Fi Alliance, vol. V.1.2 14 December 2011 pages 1-159 defines an architecture and set of protocols that facilitate WFA P2P operation.

### BRIEF DESCRIPTION OF THE DRAWINGS

FIG. 1 illustrates one embodiment of a peer-to-peer network.
FIGS. 2-3 illustrates embodiments of the peer-to-peer network of FIG. 1 in greater detail.
FIGS. 4-5 illustrate logic flows for embodiments of device and service discovery.
FIG. 6 illustrates one embodiment of a service and connection attribute discovery technique.
FIG. 7 illustrates one embodiment of a storage medium.
FIG. 8 illustrates one embodiment of a device.
FIG. 9 illustrates one embodiment of a wireless network.

### DETAILED DESCRIPTION

The invention is defined by the appended claims.

The present disclosure is generally directed to providing simple, convenient, and low power device and service discovery. More specifically, the present disclosure details various examples providing for the discovery of Wi-Fi devices and services (e.g., Wi-Fi Direct devices and services, or the like) using near field communication (NFC). For example, the present disclosure provides for a Wi-Fi Direct device to "pair" with another Wi-Fi Direct device using NFC.

Various embodiments may comprise one or more elements. An element may comprise any structure arranged to perform certain operations. Each element may be implemented as hardware, software, or any combination thereof, as desired for a given set of design parameters or performance constraints. Although an embodiment may be described with a limited number of elements in a certain topology by way of example, the embodiment may include more or less elements in alternate topologies as desired for a given implementation. It is worthy to note that any reference to "one embodiment" or "an embodiment" means that a particular feature, structure, or characteristic described in connection with the embodiment is included in at least one embodiment. The appearances of the phrases "in one embodiment," "in some embodiments," and "in various embodiments" in various places in the specification are not necessarily all referring to the same embodiment.

Various embodiments of the present disclosure may be included with or implemented by devices configured to operate in accordance with various wireless network standards. In some examples, these wireless network standards may include standards promulgated by the Wi-Fi Alliance, the Institute of Electrical Engineers (IEEE), or other standard setting organizations. With a particularly illustrative example, some embodiments may be implemented in accordance with the Wi-Fi Alliance, Wi-Fi Peer-to-Peer (P2P) Technical Specification with NFC, v1.3 2013 standard and/or the Wi-Fi Alliance, Wi-Fi Direct Services Technical Specification, v1.1 2011.

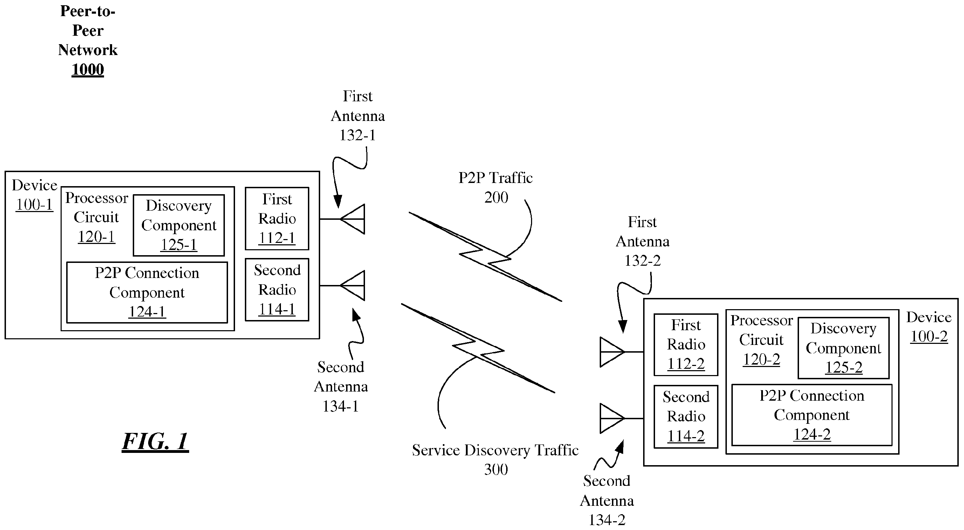

**FIG. 1** illustrates a peer-to-peer (P2P) network 1000. The network 1000 includes devices 100-a, where "a" is a positive integer. In particular, devices 100-1 and 100-2 are shown. However, it is to be appreciated, that any number of devices 100-a may be implemented, and the number of devices depicted is merely shown at a quantity to facilitate understanding.

Each of the devices 100-a includes a first radio 112-a and a second radio 114-a. In general, the second radio 114-a may be implemented to discover other devices and the other devices' available services, which may be available using the first radio 112-a for purposes of communicating over the P2P network 1000.

For example, in some embodiments, the first radio 112-a may be a Wi-Fi radio, while the second radio 114-a may be an NFC radio. As another example, the first radio 112-a may be a WiGig radio, a ZigBee radio, an LTE radio, or in general, any radio used for network communication, while the second radio 114-a may be an NFC radio. It is to be appreciated that although the examples presented herein use an NFC radio as the second radio, this is not intended to be limiting. In particular, other communication technologies (e.g., RFID, or the like) may be used without departing from the present disclosure.

Furthermore, each of the devices 100-a includes a first antenna (or antenna array) 132-a and a second antenna (or antenna array) 134-a. The first and second antennas 132-a and 134-a arc operably connected to the first and second radios 112-a and 114-a, rcspcctivcly. Additionally, it is to be appreciated that although not depicted, one of the devices 100-a may be provided with a single antenna (or antenna array) operably connected to both the first and second radios 112-a and 114-a.

Additionally, each of the devices 100-a includes a processor circuit 120-a operably coupled to the first and second radios 112-a and 114-a. In some examples, the processor circuit 120-a may be an application processor of the device 100-a. In some examples, the processor circuit 120-a may be a baseband processor of the device 100-a.

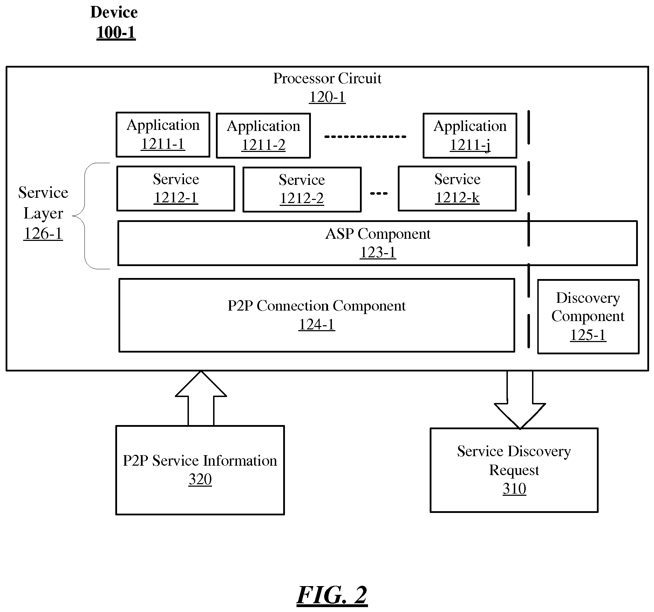

Each processor circuit 120-a includes a P2P connection component 124-a. The P2P connection component 124-a may comprise programming, functions, logic, parameters, and/or other information operative to implement particular capabilities for the devices 100-a. In particular, the P2P connection component 124-a can establish the P2P network 1000 and communicate signals over the network 1000 for the purposes of sharing services (e.g., refer to **FIGS. 2-3****).**

The processor circuit 120-a includes a discovery component 125-a. The discovery component 125-a may comprise programming, functions, logic, parameters, and/or other information operative to implement particular capabilities for the devices 100-a. In particular, the discovery component 125-a can advertise, request information about, and/or discover services available over the P2P network 1000.

In general, during operation, the devices 100-a may transmit signals including indications of services available over the P2P network 1000 (shown as service discovery traffic 300) using the second radio 114-a. Based on these signals, the devices 100-a may form the P2P network 1000 and/or communicate in the P2P network 1000 using the first radios 112-a. In particular, a device may discover another devices' services and connection attributes available through the P2P network 100 (e.g., available over the first radio, which may be a Wi-Fi radio) using the second radio (e.g., the NFC radio).

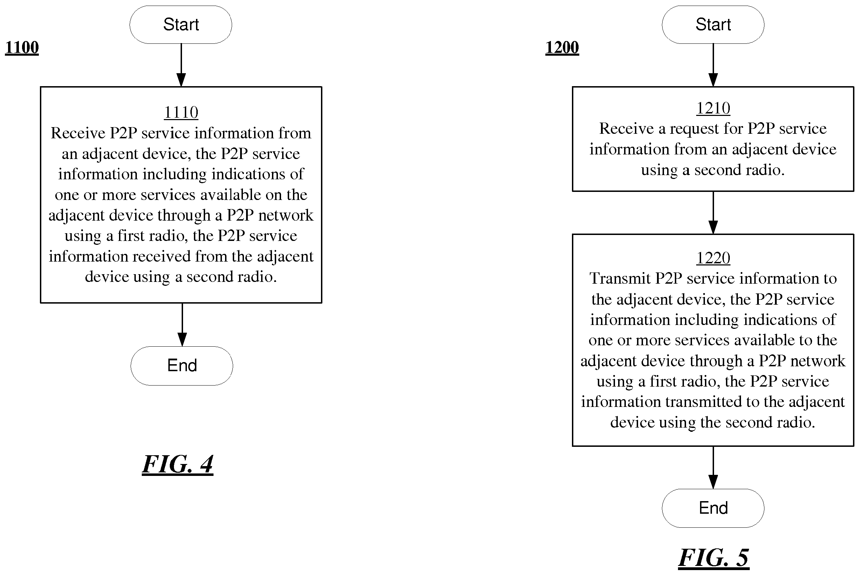

In general, each of the devices 100-a may operate to both discover an adjacent device and its services (e.g., refer to **FIG. 4****)** and to be discovered by an adjacent device and provide information about available services to the discovering device (e.g., refer to **FIG. 5****).** However, for purposes of explanation and clarity, the device 100-1 will be referred to as the "discovering device" and the device 100-2 will be referred to as the "discovered device". It is to be appreciated that this is not intended to be limiting and is merely done for convenience in referring to the figures. Furthermore, it is to be appreciated, that the term adjacent is relative and used in the context of NFC radio. In particular, as will be appreciated, NFC radio operates of a small distance relative to radio-frequency (RF) signals in general. As such, use of the term "adjacent" and/or "adjacent device" indicates a device that sufficiently close to allow an NFC radio to send and/or receive signals. For example, with out limitation, devices that are adjacent in the context of NFC may be within 5 centimeters of each other, within 10 centimeters or each other, or another such distance in which the NFC radios are capable of communicating.

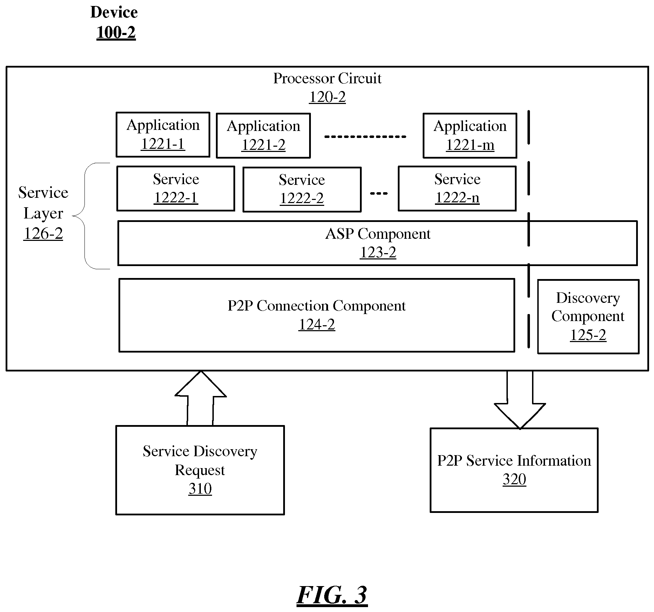

**FIGS. 2-3** illustrate portions of the device 100-1 and 100-2 in greater detail. In particular, **FIG. 2** illustrates the device 100-1 and the processor circuit 120-1 in greater detail, while **FIG. 3** illustrates the device 100-2 and the processor circuit 120-2 in greater detail. In particular, **FIGS. 2-3** illustrate example implementations of the devices 100-1 and 100-2, where the devices 100-1 and 100-2 are configured to discover services and connection attributes associated with the P2P network 1000.

As depicted, each processor circuit 120-a includes the discovery component 125-a and the P2P connection component 124-a. Additionally, each processor circuit 120-a may include a service layer 126-a. The service layer 126-a may include an application service platform (ASP) 123-a and various services (e.g., services 1212-1 to 1212-k, 1222-1 to 1222-n, or the like). Furthermore, each processor component 120-a may include applications (e.g., applications 1211-1 to 1211-j, 1221-1 to 1221-m, or the like). In some examples, the service layer 126-a may be a Wi-Fi Direct Service (WFDS) layer or simply the ASP layer.

In general, the applications (e.g., applications 1211-1 to 1211-j, 1221-1 to 1221-m) are configured to operate on the service layer 126-a to provide various functionality and/or features of the device 100-a. For example, the applications may include a print application, a file sharing application, a media streaming application, a display application, or the like. Furthermore, the applications may invoke and/or take advantage of services available on the device (e.g., services 1212-1 to 1212-k, 1222-1 to 1222-n). The ASP 123-a is configured to allow the services to be discovered and launched remotely through the P2P network 1000 (e.g., using the P2P connection component 124-a). The P2P connection component 124-a provides for communicatively coupling the device 100-a to another device 100-a through the P2P network 1000 using the first radio for purposes sharing services. The discovery component 125-a is configured to facilitate discovery of services (e.g., services 1212-1 to 1212-k, 1222-1 to 1222-n) and discovery of P2P network connection attributes using the second radio.

Turning more specifically to **FIG. 2****,** during operation, the discovery component 125-1 can receive P2P service information 320 from an adjacent device (e.g., the device 100-2) using the second radio 114-1. The P2P service information 320 may include indications of a number of services (e.g., the services 1222-1 to 1222-m) available on the adjacent device through the P2P network 1000.

Additionally, the discovery component 125-1 may transmit a service discovery request 310 to the adjacent device (e.g., the device 100-2) using the second radio 114-1. The service discovery request 310 may include an indication of a desire to receive the P2P service information 320 from the adjacent device. Additionally, the discovery request may also include advertised services and connection attributes. More particular, the discovery request 310 may include both a request for services available on the adjacent device (e.g., the device 100-2) as well as an indication of services available on the requesting device (e.g., the device 100-1).

Turning more specifically to **FIG. 3****,** during operation, the discovery component 125-2 can transmit P2P service information 320 to an adjacent device (e.g., the device 100-1) using the second radio 114-2. The P2P service information 320 may include indications of a number of services (e.g., the services 1222-1 to 1222-m) available to the adjacent device through the P2P network 1000.

Additionally, the discovery component 125-2 may receive a service discovery request 310 from the adjacent device (e.g., the device 100-1) using the second radio 114-2. The service discovery request 310 may include an indication of a desire to receive the P2P service information 320 from the adjacent device. Additionally, the discovery request may also include advertised services and connection attributes. More particular, the discovery request 310 may include both a request for services available on the adjacent device (e.g., the device 100-2) as well as an indication of services available on the requesting device (e.g., the device 100-1).

In some examples, the service discovery request 310 is a handover request frame while the P2P service information 320 is a handover select frame, such as, for example, handover request frames and handover select frames as described in the Wi-Fi Alliance *Wi-Fi Peer-to-Peer (P2P) Technical Specification with NFC,* v1.3, *or NFC specifications.*

In some examples, the handover request frame may include the Service Hash attribute as part of the P2P attributes transmitted in the handover request frame. In some examples, the handover request frame may include the wireless control system (WCS) attributes. Accordingly, the service discovery request may include both a request to discover services as well as an advertisement of available services.

In some examples, the handover select frame may include the advertised services information as part of the P2P attributes. In some examples, the handover select frame may include the WCS attributes.

Accordingly, service discovery and "pairing" may be facilitated using NFC. In particular, Wi-Fi Direct device discovery and configuration may be facilitated using NFC by transmitting and receiving the service discovery request 310 and the P2P service information 320 with the second radio 114-a.

**FIGS. 4-5** illustrate examples of logic flows representative of at least some operations executed by one or more logic, features, or devices described herein. In general, the logic flows may be representative of some or all of the operations executed by logic and/or features of the devices 100-a of the system 1000. In particular, **FIG. 4** may be representative of operations performed by the device 100-1 in discovering services and connection attributes of the device 100-2 while **FIG. 5** may be representative of operations performed by the device 100-2 in advertising it services and connection attributes. It is to be appreciated, that although the example logic flows are described with reference to the system 1000 of **FIGS. 1-3****,** this is not intended to be limiting and is merely done for clarity of presentation.

Turning more specifically to **FIG. 4****,** a logic flow 1100 is depicted. The logic flow 1100 may begin at block 1110. At block 1110, "receive P2P service information from an adjacent device, the P2P service information including indications of one or more services available on the adjacent device through a P2P network using a first radio, the P2P service information received from the adjacent device using a second radio" the device 100-1 may receive P2P service information including an indication of services available on the P2P network 1000 and connection attributes for the network 1000 using the second radio 114-1. In particular, the discovery component 125-1 may receive the P2P service information 320 from the device 100-1 using the second radio 114-1.

Turning more specifically to **FIG. 5****,** a logic flow 1200 is depicted. The logic flow 1200 may begin at block 1210. At block 1210, "receive a request for P2P service information from an adjacent device using a second radio" the device 100-2 may receive a request for P2P service information using the second radio 114-2. In particular, the discovery component 125-2 may receive the service discovery request 310 from the device 100-1 using the second radio 114-1.

Continuing to block 1220, "transmit P2P service information to an adjacent device, the P2P service information including indications of one or more services available to the adjacent device through a P2P network using a first radio, the P2P service information transmitted to the adjacent device using a second radio" the device 100-2 may transmit P2P service information including an indication of services available on the P2P network 1000 and connection attributes for the network 1000 using the second radio 114-1. In particular, the discovery component 125-2 may transmit the P2P service information 320 to the device 100-1 using the second radio 114-1.

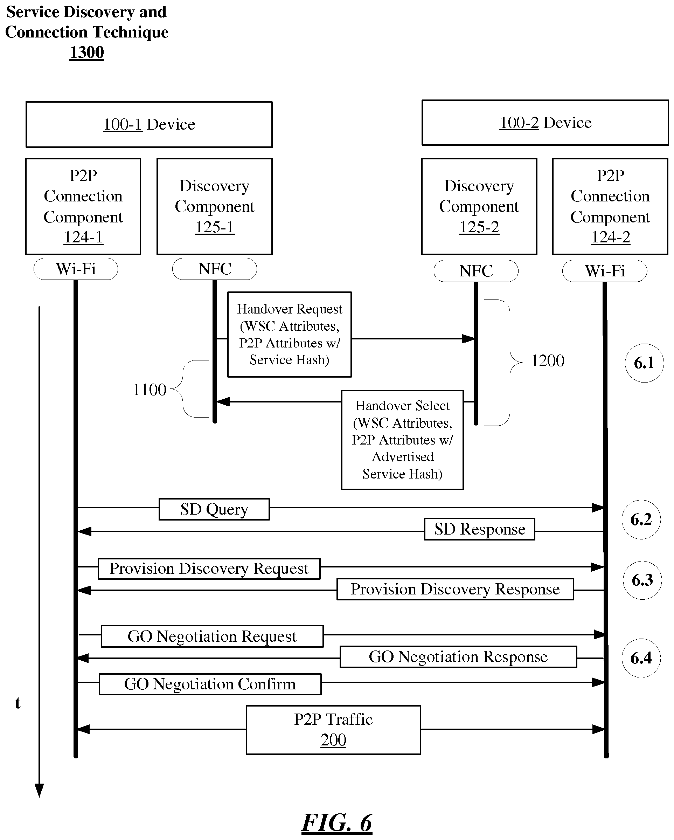

**FIG. 6** illustrates an example service discovery and connection technique 1300. In some examples, the devices 100-a can implement the technique 1300. In particular, the acts depicted in the technique 1300 may be representative of a technique such as may be performed in various mbodiments of the present disclosure. More particularly, the technique 1300 may be representative of a service discovery and connection procedure during which P2P networks services and P2P network connection attributes are communicated using the second radios 114-a to facilitate establishing and/or communicating in the P2P network using the first radio 112-a.

In the technique 1300, communications regarding a Wi-Fi P2P network and services available over the network are exchanged between the devices 100-1 and 100-2 using NFC radios. Said differently, the devices 100-1 and 100-2 may "pair" with each other over NFC for purposes of establishing a P2P network over Wi-Fi.

In particular, the technique 1300 at process 6.1, the device 100-1 and the device 100-2 communicate information about the services (e.g., services 1212-1 to 1212-k, 1222-1 to 1222-n) available on the P2P network 1000 using the second radio 114-1 and 114-2, which can be an NFC radio. In particular, at process 6.1, the device 100-1 may perform operations of the logic flow 1100, while the device 100-2 may perform operations of the logic flow 1200.

Continuing to process 6.2, the device 100-1 and the device 100-2 may conduct service discovery (SD) over Wi-Fi (e.g., using the first radio 112-a) using the P2P network information exchanged during process 6.1. Continuing to process 6.3, the device 100-1 and the device 100-2 may conduct provisioning discovery over Wi-Fi (e.g., using the first radio 112-a) using the P2P network information exchanged during process 6.1. Continuing to process 6.4, the device 100-1 and the device 100-2 may form the P2P network 1000 over Wi-Fi (e.g., using the first radio 112-a) using the P2P network information exchanged during process 6.1.

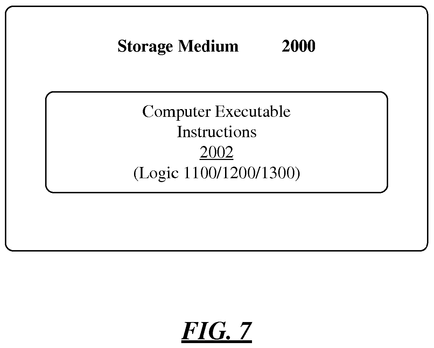

**FIG. 7** illustrates an embodiment of a storage medium 2000. The storage medium 2000 may comprise an article of manufacture. In some examples, the storage medium 2000 may include any non-transitory computer readable medium or machine readable medium, such as an optical, magnetic or semiconductor storage. The storage medium 2000 may store various types of computer executable instructions e.g., 2002). For example, the storage medium 2000 may store various types of computer executable instructions to implement logic flow 1100. In some examples, the storage medium 2000 may store various types of computer executable instructions to implement logic flow 1200. In some examples, the storage medium 2000 may store various types of computer executable instructions to implement logic flow 1300.

Examples of a computer readable or machine readable storage medium may include any tangible media capable of storing electronic data, including volatile memory or non-volatile memory, removable or non-removable memory, erasable or non-erasable memory, writeable or re-writeable memory, and so forth. Examples of computer executable instructions may include any suitable type of code, such as source code, compiled code, interpreted code, executable code, static code, dynamic code, object-oriented code, visual code, and the like. The examples are not limited in this context.

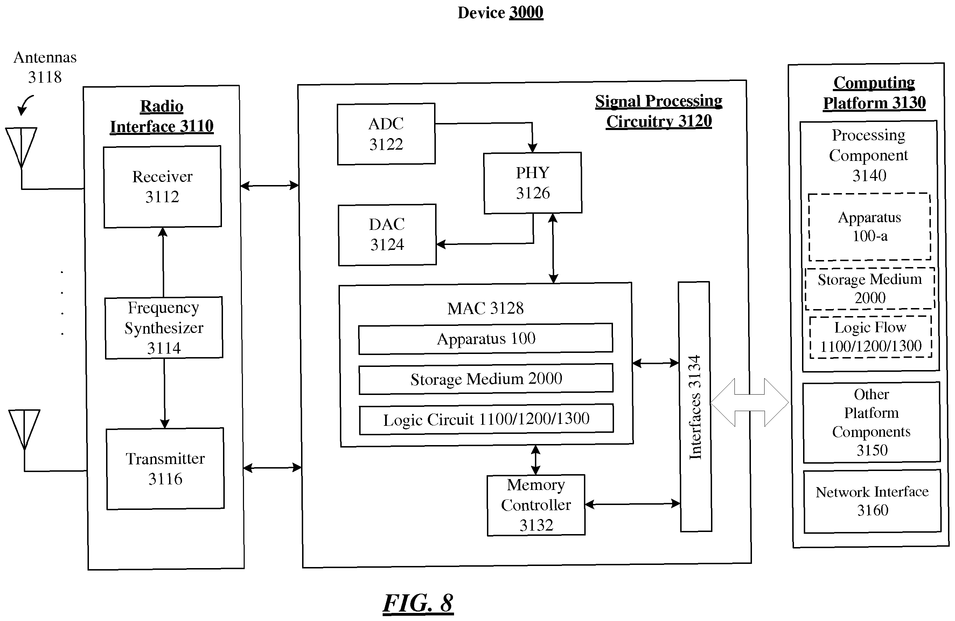

**FIG. 8** illustrates an embodiment of a device 3000. In some examples, device 3000 may be configured or arranged for wireless communications in a P2P network such as the P2P network 1000 shown in FIG. 1. In some examples, one of the devices 100-a may be implemented in the device 3000. For example, the device 3000 may implement the device as apparatus 100-a. Additionally, the device 3000 may implement storage medium 2000 and/or a logic circuit 1100/1200/1300. The logic circuits may include physical circuits to perform operations described for the apparatus 100-a, storage medium 2000, logic flow 1100, logic flow 1200, and/or logic flow 1300. As shown in FIG. 8, device 3000 may include a radio interface 3110, baseband circuitry 3120, and computing platform 3130, although examples are not limited to this configuration.

The device 3000 may implement some or all of the structure and/or operations for the apparatus 100-a, the storage medium 2000 and/or the logic circuit 1100/1200/1300 in a single computing entity, such as entirely within a single device. The embodiments are not limited in this context.

Radio interface 3110 may include a component or combination of components adapted for transmitting and/or receiving single carrier or multi-carrier modulated signals (e.g., including complementary code keying (CCK) and/or orthogonal frequency division multiplexing (OFDM) symbols and/or single carrier frequency division multiplexing (SC-FDM symbols) although the embodiments are not limited to any specific over-the-air interface or modulation scheme. Radio interface 3110 may include, for example, a receiver 3112, a transmitter 3116 and/or a frequency synthesizer 3114. Radio interface 3110 may include bias controls, a crystal oscillator and antennas 3118-1 to 3118-f. In another embodiment, radio interface 3110 may use external voltage-controlled oscillators (VCOs), surface acoustic wave filters, intermediate frequency (IF) filters and/or RF filters, as desired. Due to the variety of potential RF interface designs, an expansive description thereof is omitted.

Baseband circuitry 3120 may communicate with radio interface 3110 to process receive and/or transmit signals and may include, for example, an analog-to-digital converter 3122 for down converting received signals, a digital-to-analog converter 3124 for up converting signals for transmission. Further, baseband circuitry 3120 may include a baseband or physical layer (PHY) processing circuit 3126 for PHY link layer processing of respective receive/transmit signals. Baseband circuitry 3120 may include, for example, a processing circuit 3128 for medium access control (MAC)/data link layer processing. Baseband circuitry 3120 may include a memory controller 3132 for communicating with MAC processing circuit 3128 and/or a computing platform 3130, for example, via one or more interfaces 3134.

In some embodiments, PHY processing circuit 3126 may include a frame construction and/or detection module, in combination with additional circuitry such as a buffer memory, to construct and/or deconstruct communication frames (e.g., containing subframes). Alternatively or in addition, MAC processing circuit 3128 may share processing for certain of these functions or perform these processes independent of PHY processing circuit 3126. In some embodiments, MAC and PHY processing may be integrated into a single circuit.

Computing platform 3130 may provide computing functionality for device 3000. As shown, computing platform 3130 may include a processing component 3140. In addition to, or alternatively of, baseband circuitry 3120 of device 3000 may execute processing operations or logic for the apparatus 100a, storage medium 2000, and logic circuits 1100/1200/1300 using the processing component 3130. Processing component 3140 (and/or PHY 3126 and/or MAC 3128) may comprise various hardware elements, software elements, or a combination of both. Examples of hardware elements may include devices, logic devices, components, processors, microprocessors, circuits, processor circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), memory units, logic gates, registers, semiconductor device, chips, microchips, chip sets, and so forth. Examples of software elements may include software components, programs, applications, computer programs, application programs, system programs, software development programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an example is implemented using hardware elements and/or software elements may vary in accordance with any number of factors, such as desired computational rate, power levels, heat tolerances, processing cycle budget, input data rates, output data rates, memory resources, data bus speeds and other design or performance constraints, as desired for a given example.

Computing platform 3130 may further include other platform components 3150. Other platform components 3150 include common computing elements, such as one or more processors, multi-core processors, co-processors, memory units, chipsets, controllers, peripherals, interfaces, oscillators, timing devices, video cards, audio cards, multimedia input/output (I/O) components (e.g., digital displays), power supplies, and so forth. Examples of memory units may include without limitation various types of computer readable and machine readable storage media in the form of one or more higher speed memory units, such as read-only memory (ROM), random-access memory (RAM), dynamic RAM (DRAM), Double-Data-Rate DRAM (DDRAM), synchronous DRAM (SDRAM), static RAM (SRAM), programmable ROM (PROM), erasable programmable ROM (EPROM), electrically erasable programmable ROM (EEPROM), flash memory, polymer memory such as ferroelectric polymer memory, ovonic memory, phase change or ferroelectric memory, silicon-oxide-nitride-oxide-silicon (SONOS) memory, magnetic or optical cards, an array of devices such as Redundant Array of Independent Disks (RAID) drives, solid state memory devices (e.g., USB memory, solid state drives (SSD) and any other type of storage media suitable for storing information.

Computing platform 3130 may further include a network interface 3160. In some examples, network interface 3160 may include logic and/or features to support network interfaces operated in compliance with one or more wireless broadband technologies such as those described in one or more standards associated with IEEE 802.11 such as IEEE 802.11u or with technical specification such as WFA Hotspot 2.0.

Device 3000 may be part of a device in a P2P network and may be included in various types of computing devices to include, but not limited to, user equipment, a computer, a personal computer (PC), a desktop computer, a laptop computer, a notebook computer, a netbook computer, a tablet computer, an ultra-book computer, a smart phone, embedded electronics, a gaming console, a server, a server array or server farm, a web server, a network server, an Internet server, a work station, a mini-computer, a main frame computer, a supercomputer, a network appliance, a web appliance, a distributed computing system, multiprocessor systems, processor-based systems, or combination thereof. Accordingly, functions and/or specific configurations of device 2000 described herein; may be included or omitted in various embodiments of device 2000, as suitably desired. In some embodiments, device 2000 may be configured to be compatible with protocols and frequencies associated with IEEE 802.11 Standards or Specification and/or 3GPP Standards or Specifications for MIMO systems, although the examples are not limited in this respect.

The components and features of device 3000 may be implemented using any combination of discrete circuitry, application specific integrated circuits (ASICs), logic gates and/or single chip architectures. Further, the features of device 3000 may be implemented using microcontrollers, programmable logic arrays and/or microprocessors or any combination of the foregoing where suitably appropriate. It is noted that hardware, firmware and/or software elements may be collectively or individually referred to herein as "logic" or "circuit."

It should be appreciated that the exemplary device 3000 shown in the block diagram of FIG. 8 may represent one functionally descriptive example of many potential implementations. Accordingly, division, omission or inclusion of block functions depicted in the accompanying figures does not infer that the hardware components, circuits, software and/or elements for implementing these functions would be necessarily be divided, omitted, or included in embodiments.

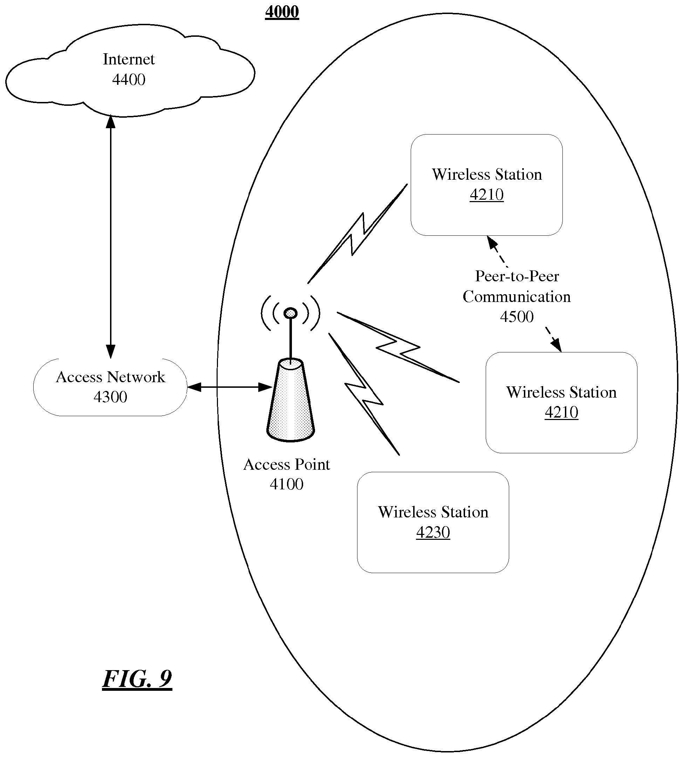

**FIG. 9** illustrates an embodiment of a wireless network 4000. As shown in FIG. 7, wireless network 4000 comprises an access point 4100 and wireless stations 4210, 4220, and 4230. In various embodiments, wireless network 4000 may comprise a wireless local area network (WLAN), such as a WLAN implementing one or more Institute of Electrical and Electronics Engineers (IEEE) 802.11 standards (sometimes collectively referred to as "Wi-Fi"). In some other embodiments, wireless network 4000 may comprise another type of wireless network, and/or may implement other wireless communications standards. In various embodiments, for example, wireless network 4000 may comprise a WWAN or WPAN rather than a WLAN. The embodiments are not limited to this example.

In some embodiments, wireless network 4000 may implement one or more broadband wireless communications standards, such as 3G or 4G standards, including their revisions, progeny, and variants. Examples of 3G or 4G wireless standards may include without limitation any of the IEEE 802.16m and 802.16p standards, 3rd Generation Partnership Project (3GPP) Long Term Evolution (LTE) and LTE-Advanced (LTE-A) standards, and International Mobile Telecommunications Advanced (IMT-ADV) standards, including their revisions, progeny and variants. Other suitable examples may include, without limitation, Global System for Mobile Communications (GSM)/Enhanced Data Rates for GSM Evolution (EDGE) technologies, Universal Mobile Telecommunications System (UMTS)/High Speed Packet Access (HSPA) technologies, Worldwide Interoperability for Microwave Access (WiMAX) or the WiMAX II technologies, Code Division Multiple Access (CDMA) 2000 system technologies (e.g., CDMA2000 1xRTT, CDMA2000 EV-DO, CDMA EV-DV, and so forth), High Performance Radio Metropolitan Area Network (HIPERMAN) technologies as defined by the European Telecommunications Standards Institute (ETSI) Broadband Radio Access Networks (BRAN), Wireless Broadband (WiBro) technologies, GSM with General Packet Radio Service (GPRS) system (GSM/GPRS) technologies, High Speed Downlink Packet Access (HSDPA) technologies, High Speed Orthogonal Frequency-Division Multiplexing (OFDM) Packet Access (HSOPA) technologies, High-Speed Uplink Packet Access (HSUPA) system technologies, 3GPP Rel. 8-12 of LTE/System Architecture Evolution (SAE), and so forth. The embodiments are not limited in this context.

In various embodiments, wireless stations 4210, 4220, and 4230 may communicate with access point 4100 in order to obtain connectivity to one or more external data networks. In some embodiments, for example, wireless stations 4210, 4220, and 4230 may connect to the Internet 4400 via access point 4100 and access network 4300. In various embodiments, access network 4300 may comprise a private network that provides subscription-based Internet-connectivity, such as an Internet Service Provider (ISP) network. The embodiments are not limited to this example.

In various embodiments, two or more of wireless stations 4210, 4220, and 4230 may communicate with each other directly by exchanging peer-to-peer communications. For example, as depicted in FIG. 9, wireless stations 4210 and 4220 communicate with each other directly by exchanging peer-to-peer (P2P) communications 4500. In some examples, the P2P communications 4500 may be established using the techniques described herein. More specifically, some examples services available to share using the P2P communications 4500 may be advertised and/or discovered using the techniques discussed herein. In particular, NFC radios may be used to "pair" the wireless stations 4210 and 4220 for purposes of establishing the P2P communication 4500.

In some embodiments, such peer-to-peer communications may be performed according to one or more Wi-Fi Alliance (WFA) standards. For example, in various embodiments, such peer-to-peer communications may be performed according to the WFA Wi-Fi Direct standard, 2010 Release. In various embodiments, such peer-to-peer communications may additionally or alternatively be performed using one or more interfaces, protocols, and/or standards developed by the WFA Wi-Fi Direct Services (WFDS) or ASP2 programs. In various embodiments, such peer-to-peer communications may be performed according to the WFA NAN protocol. The embodiments are not limited to these examples.

Various embodiments may be implemented using hardware elements, software elements, or a combination of both. Examples of hardware elements may include processors, microprocessors, circuits, circuit elements (e.g., transistors, resistors, capacitors, inductors, and so forth), integrated circuits, application specific integrated circuits (ASIC), programmable logic devices (PLD), digital signal processors (DSP), field programmable gate array (FPGA), logic gates, registers, semiconductor device, chips, microchips, chip sets, and so forth. Examples of software may include software components, programs, applications, computer programs, application programs, system programs, machine programs, operating system software, middleware, firmware, software modules, routines, subroutines, functions, methods, procedures, software interfaces, application program interfaces (API), instruction sets, computing code, computer code, code segments, computer code segments, words, values, symbols, or any combination thereof. Determining whether an embodiment is implemented using hardware elements and/or software elements may vary in accordance with any number of factors, such as desired computational rate, power levels, heat tolerances, processing cycle budget, input data rates, output data rates, memory resources, data bus speeds and other design or performance constraints.

One or more aspects of at least one embodiment may be implemented by representative instructions stored on a machine-readable medium which represents various logic within the processor, which when read by a machine causes the machine to fabricate logic to perform the techniques described herein. Such representations, known as "IP cores" may be stored on a tangible, machine readable medium and supplied to various customers or manufacturing facilities to load into the fabrication machines that actually make the logic or processor. Some embodiments may be implemented, for example, using a machine-readable medium or article which may store an instruction or a set of instructions that, if executed by a machine, may cause the machine to perform a method and/or operations in accordance with the embodiments. Such a machine may include, for example, any suitable processing platform, computing platform, computing device, processing device, computing system, processing system, computer, processor, or the like, and may be implemented using any suitable combination of hardware and/or software. The machine-readable medium or article may include, for example, any suitable type of memory unit, memory device, memory article, memory medium, storage device, storage article, storage medium and/or storage unit, for example, memory, removable or non-removable media, erasable or non-erasable media, writeable or re-writeable media, digital or analog media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD), a tape, a cassette, or the like. The instructions may include any suitable type of code, such as source code, compiled code, interpreted code, executable code, static code, dynamic code, encrypted code, and the like, implemented using any suitable high-level, low-level, object-oriented, visual, compiled and/or interpreted programming language.

Numerous specific details have been set forth herein to provide a thorough understanding of the embodiments. It will be understood by those skilled in the art, however, that the embodiments may be practiced without these specific details. In other instances, well-known operations, components, and circuits have not been described in detail so as not to obscure the embodiments. It can be appreciated that the specific structural and functional details disclosed herein may be representative and do not necessarily limit the scope of the embodiments.

Some embodiments may be described using the expression "coupled" and "connected" along with their derivatives. These terms are not intended as synonyms for each other. For example, some embodiments may be described using the terms "connected" and/or "coupled" to indicate that two or more elements are in direct physical or electrical contact with each other. The term "coupled," however, may also mean that two or more elements are not in direct contact with each other, but yet still co-operate or interact with each other.

Unless specifically stated otherwise, it may be appreciated that terms such as "processing," "computing," "calculating," "determining," or the like, refer to the action and/or processes of a computer or computing system, or similar electronic computing device, that manipulates and/or transforms data represented as physical quantities (e.g., electronic) within the computing system's registers and/or memories into other data similarly represented as physical quantities within the computing system's memories, registers or other such information storage, transmission or display devices. The embodiments are not limited in this context.

It should be noted that the methods described herein do not have to be executed in the order described, or in any particular order. Moreover, various activities described with respect to the methods identified herein can be executed in serial or parallel fashion.

Although specific embodiments have been illustrated and described herein, it should be appreciated that any arrangement calculated to achieve the same purpose might be substituted for the specific embodiments shown. This disclosure is intended to cover any and all adaptations or variations of various embodiments. It is to be understood that the above description has been made in an illustrative fashion, and not a restrictive one. Combinations of the above embodiments, and other embodiments not specifically described herein will be apparent to those of skill in the art upon reviewing the above description. Thus, the scope of various embodiments includes any other applications in which the above compositions, structures, and methods are used.

## Claims

1. An apparatus for a first device (100-1) in a wireless network, the apparatus comprising:
circuitry (120-a);
a peer-to-peer, P2P, connection component (124-a) executable by the circuitry, wherein the P2P connection component is configured to connect to a P2P network (1000) using a Wi-Fi radio (112-a), wherein the P2P network comprises a Wi-Fi Direct network; and
a discovery component (125-a) executable by the circuitry, wherein the discovery component is configured to:
transmit a handover request frame to a second device (100-2) using a near field communication, NFC, radio (114-a), the handover request frame including an indication of a request to receive P2P service information from the second device, wherein the handover request frame includes a P2P attributes portion including an indication of a service hash, and wherein the handover request frame further includes an indication of services available to the second device (100-2) through the P2P network;
receive a handover select frame from the second device using the NFC radio (114-a), wherein the handover select frame includes a P2P attributes portion including an indication of one or more services available on the second device through the P2P network.

2. The apparatus of claim 1, wherein the discovery component is configured to send a control directive to power on the NFC radio in order to receive the handover select frame.

3. The apparatus of claim 1, further comprising:
a first antenna array (132-a) operably coupled to the Wi-Fi radio; and
a second antenna array (134-a) operably coupled to the NFC radio.

4. The apparatus of claim 1, wherein the circuitry comprises an application processor or a baseband processor.

5. A method implemented by a first device (100-a) in a wireless network, the method comprising:
transmitting a handover request frame to a second device (100-2) using a near field communication NFC radio (114-a), the handover request frame including an indication of a request to receive P2P service information from the second device, wherein the handover request frame includes a P2P attributes portion including an indication of a service hash, and wherein the handover request frame further includes an indication of services available to the second device (100-2) through the P2P network;
receiving a handover select frame from the 2. second device using the NFC radio, wherein the handover select frame includes a P2P attributes portion including an indication of one or more services available on the second device through a P2P network using a Wi-Fi radio (112-a).

6. At least one machine readable medium comprising a plurality of instructions that in response to being executed on a wireless device (100-1) cause the wireless device to:
receive a handover request frame from another device (100-2) using a near field communication NFC radio (114-a), the handover request frame including an indication of a request to receive peer-to-peer, P2P, service information, wherein the handover request frame includes a P2P attributes portion including an indication of a service hash, and wherein the handover request frame further includes an indication of services available on the other device (100-2) through the P2P network; and
transmit a handover select frame to the other device using the NFC radio, the handover select frame including indications of one or more services available to the other device through a P2P network (1000) using a Wi-Fi radio (112-a), the P2P network comprising a Wi-Fi Direct network.

## Patentansprüche

1. Vorrichtung für ein erstes Gerät (100-1) in einem Drahtlosnetzwerk, wobei die Vorrichtung aufweist:
eine Schaltungsanordnung (120-a);
eine Peer-to-Peer(P2P)-Verbindungskomponente (124-a) , die durch die Schaltungsanordnung ausführbar ist, wobei die P2P-Verbindungskomponente zum Verbinden mit einem P2P-Netzwerk (1000) unter Verwendung einer Wi-Fi-Funkeinrichtung (112-a) ausgebildet ist, wobei das P2P-Netzwerk ein Wi-Fi-Direct-Netzwerk umfasst; und
eine Entdeckungskomponente (125-a), die durch die Schaltungsanordnung ausführbar ist, wobei die Entdeckungskomponente ausgebildet ist zum:
Übertragen eines Handover-anfragen-Frames an ein zweites Gerät (100-2) unter Verwendung einer Nahfeldkommunikation(NFC)-Funkeinrichtung (114-a), wobei der Handover-anfragen-Frame eine Angabe einer Anfrage zum Empfangen von P2P-Dienstinformation von dem zweiten Gerät enthält, wobei der Handover-anfragen-Frame einen P2P-Attributeabschnitt enthält, der eine Angabe eines Dienst-Hashwerts enthält, und wobei der Handover-anfragen-Frame ferner eine Angabe von Diensten enthält, die für das zweite Gerät (100-2) über das P2P-Netzwerk verfügbar sind;
Empfangen eines Handover-auswählen-Frames von dem zweiten Gerät unter Verwendung der NFC-Funkeinrichtung (114-a), wobei der Handover-auswählen-Frame einen P2P-Attributeabschnitt enthält, der eine Angabe eines oder mehrerer Dienste enthält, die auf dem zweiten Gerät über das P2P-Netzwerk verfügbar sind.

2. Vorrichtung nach Anspruch 1, wobei die Entdeckungskomponente ausgebildet ist zum Senden einer Steuerdirektive zum Einschalten der NFC-Funkeinrichtung, um den Handover-auswählen-Frame zu empfangen.

3. Vorrichtung nach Anspruch 1, die ferner aufweist:
ein erstes Antennen-Array (132-a), das mit der Wi-Fi-Funkeinrichtung funktionsmäßig gekoppelt ist; und
ein zweites Antennen-Array (134-a), das mit der NFC-Funkeinrichtung funktionsmäßig gekoppelt ist.

4. Vorrichtung nach Anspruch 1, wobei die Schaltungsanordnung einen Anwendungsprozessor oder einen Basisbandprozessor umfasst.

5. Verfahren, das von einem ersten Gerät (100-a) in einem Drahtlosnetzwerk implementiert wird, wobei das Verfahren umfasst:
Übertragen eines Handover-anfragen-Frames an ein zweites Gerät (100-2) unter Verwendung einer Nahfeldkommunikation(NFC)-Funkeinrichtung (114-a), wobei der Handover-anfragen-Frame eine Angabe einer Anfrage zum Empfangen von P2P-Dienstinformation von dem zweiten Gerät enthält, wobei der Handover-anfragen-Frame einen P2P-Attributeabschnitt enthält, der eine Angabe eines Dienst-Hashwerts enthält, und wobei der Handover-anfragen-Frame ferner eine Angabe von Diensten enthält, die für das zweite Gerät (100-2) über das P2P-Netzwerk verfügbar sind;
Empfangen eines Handover-auswählen-Frames von dem zweiten Gerät unter Verwendung der NFC-Funkeinrichtung, wobei der Handover-auswählen-Frame einen P2P-Attributeabschnitt enthält, der eine Angabe eines oder mehrerer Dienste enthält, die auf dem zweiten Gerät über ein P2P-Netzwerk unter Verwendung einer Wi-Fi-Funkeinrichtung (112-a) verfügbar sind.

6. Mindestens ein maschinenlesbares Medium, das eine Mehrzahl von Anweisungen aufweist, die als Reaktion darauf, dass sie auf einem Drahtlosgerät (100-1) ausgeführt werden, bewirken, dass das Drahtlosgerät:
einen Handover-anfragen-Frame von einem anderen Gerät (100-2) unter Verwendung einer Nahfeldkommunikation(NFC)-Funkeinrichtung (114-a) empfängt, wobei der Handover-anfragen-Frame eine Angabe einer Anfrage zum Empfangen von Peer-to-Peer(P2P)-Dienstinformation enthält, wobei der Handover-anfragen-Frame einen P2P-Attributeabschnitt enthält, der eine Angabe eines Dienst-Hashwerts enthält, und wobei der Handover-anfragen-Frame ferner eine Angabe von Diensten enthält, die auf dem anderen Gerät (100-2) über das P2P-Netzwerk verfügbar sind; und
einen Handover-auswählen-Frame an das andere Gerät unter Verwendung der NFC-Funkeinrichtung überträgt, wobei der Handover-auswählen-Frame Angaben eines oder mehrerer Dienste enthält, die für das andere Gerät über ein P2P-Netzwerk (1000) unter Verwendung einer Wi-Fi-Funkeinrichtung (112-a) verfügbar sind, wobei das P2P-Netzwerk ein Wi-Fi-Direct-Netzwerk umfasst.

## Revendications

1. Appareil destiné à un premier dispositif (100-1) dans un réseau sans fil, l'appareil comprenant :
des circuits (120-a),
un composant de connexion de pair à pair, P2P, (124-a) exécutable par les circuits, le composant de connexion P2P étant configuré pour se connecter à un réseau de connexion P2P (1000) en utilisant une radio Wi-Fi (112-a), le réseau de connexion P2P comprenant un réseau direct Wi-Fi, et
un composant de recherche (125-a) exécutable par les circuits, le composant de recherche étant configuré pour :
transmettre une trame de requête de transfert de communication à un second dispositif (100-2) en utilisant une radio à communication en champ proche, NFC, (114-a), la trame de requête de transfert de communication incluant l'indication d'une requête pour recevoir des informations de service de connexion P2P provenant du second dispositif, la trame de requête de transfert de communication incluant une partie d'attributs de connexion P2P incluant l'indication d'un hachage de service, et la trame de requête de transfert de communication incluant en outre l'indication de services disponibles pour le second dispositif (100-2) au travers du réseau de connexion P2P,
recevoir une trame de sélection de transfert de communication en provenance du second dispositif en utilisant la radio à communication NFC (114-a), la trame de sélection de transfert de communication incluant une partie d'attributs de connexion P2P incluant l'indication concernant un ou plusieurs services disponibles sur le second dispositif par l'intermédiaire du réseau de connexion P2P.

2. Appareil selon la revendication 1, dans lequel le composant de recherche est configuré pour envoyer une directive de commande pour mettre en service la radio à communication NFC afin de recevoir la trame de sélection de transfert de communication.

3. Appareil selon la revendication 1, comprenant en outre :
un premier réseau d'antennes (132-a) couplées fonctionnellement à la radio Wi-Fi, et
un second réseau d'antennes (134-a) couplées fonctionnellement à la radio à communication NFC.

4. Appareil selon la revendication 1, dans lequel les circuits comprennent un processeur d'application ou un processeur en bande de base.

5. Procédé implémenté par un premier dispositif (100-a) dans un réseau sans fil, le procédé comprenant :
la transmission d'une trame de requête de transfert de communication à un second dispositif (100-2) en utilisant une radio à communication en champ proche, NFC, (114-a), la trame de requête de transfert de communication incluant l'indication d'une requête pour recevoir des informations de service de connexion P2P provenant du second dispositif, la trame de requête de transfert de communication incluant une partie d'attributs de connexion P2P incluant l'indication d'un hachage de service, et la trame de requête de transfert de communication incluant en outre l'indication de services disponibles pour le second dispositif (100-2) par l'intermédiaire du réseau de connexion P2P,
la réception d'une trame de sélection de transfert de communication en provenance du second dispositif en utilisant la radio à communication NFC, la trame de sélection de transfert de communication incluant une partie d'attributs de connexion P2P incluant l'indication d'un ou plusieurs services disponibles sur le second dispositif par l'intermédiaire d'un réseau de connexion P2P en utilisant une radio Wi-Fi (112-a).

6. Support unique ou multiple pouvant être lu par une machine comprenant une pluralité d'instructions qui, en réponse à une exécution effectuée sur le dispositif sans fil (100-1), amènent le dispositif sans fil à :
recevoir une trame de requête de transfert de communication provenant d'un autre dispositif (100-2) en utilisant une radio à communication en champ proche, NFC, (114-a), la trame de requête de transfert de communication incluant l'indication d'une requête pour recevoir des informations de service de pair à pair, P2P, la trame de requête de transfert de communication incluant une partie d'attributs de connexion P2P incluant l'indication d'un hachage de service, et la trame de requête de transfert de communication incluant en outre l'indication de services disponibles sur l'autre dispositif (100-2) par l'intermédiaire du réseau de connexion P2P, et
transmettre une trame de sélection de transfert de communication à l'autre dispositif en utilisant la radio à communication NFC, la trame de sélection de transfert de communication incluant les indications d'un ou plusieurs services disponibles pour l'autre dispositif par l'intermédiaire d'un réseau de connexion P2P (1000) en utilisant une radio Wi-Fi (112-a), le réseau de connexion P2P comprenant un réseau direct Wi-Fi.
